# EUROPEAN PATENT APPLICATION

(11) **EP 1 594 237 A2**
(43) Date of publication of application: **09.11.2005**
(21) Application number: 05252545.8
(22) Date of filing: 22.04.2005
(51) Int. Cl.: H04B 10/10

(54) **Optical communications system for diagnostic information applications**

(30) Priority: 08.05.2004 GB 0410424
(71) Applicant: HEBER LIMITED, Stroud, Gloucestershire GL6 8NT (GB)
(72) Inventor: Gardiner, William, Stroud, Gloucestershire GL6 8NT (GB)
(74) Representative: Bailey, Richard Alan

(57) **Abstract**

A communications system comprises a light source 18 and a controlling operation thereof so as to cause the light source 18 to flicker at a frequency sufficiently high to be invisible to the human eye whilst permitting data to be transmitted thereby.

## Description

This invention relates to a communications system suitable for use in the transmission of data.

In a number of electronically controlled devices it is becoming increasingly common to provide diagnostic information whereby a maintenance or service engineer can be provided with data indicative of the operation of the device. For example, it may be desirable to provide a washing machine service or maintenance engineer with data representative of the output of, for example, a water temperature sensor thereby allowing him to assess whether or not a heating element or the sensor itself is functioning correctly. One way in which such data can be supplied is to provide the engineer with a handset to be electrically connected to the control unit of the device. However, such a technique either requires the engineer to first remove the casing of the device, which can be time-consuming and give rise to safety concerns, or requires the device to be provided with a socket to receive a plug associated with the handset.

It is an object of the invention to provide a communications system suitable for use in such applications which is of simple and convenient form.

According to the present invention there is provided a communications system comprising an optical light source and a controller controlling the operation of the light source in such a manner as to cause the light source to flicker at a high frequency, thereby transmitting data, the frequency of the flicker being sufficiently high that the flickering is not apparent to the human eye.

Conveniently the light source is arranged to be constantly illuminated during normal operation of the device, for example a power-on indicator light, but this need not be the case and the light source could be arranged to be illuminated, for example, only at certain times or in certain modes of operation of the device.

The controller conveniently includes an encoder arranged to modulate a control signal used to control the light source to cause the high frequency flicker and transmission of data.

The light source may take a range of forms, for example it could comprise a lamp, a LED, a VFD or a LCD.

In order to be invisible to the human eye, the modulation technique used by the encoder conveniently results in the control signal having no DC component. Suitable techniques include MFM, F/2F and Manchester encoding techniques, but other techniques are possible. The modulation frequency should preferably be greater than about 100Hz.

One or more additional light sources may be provided and controlled so as to flicker, in use, at a frequency not apparent to the human eye to transmit data.

The invention further relates to a device incorporating a communications system of the type described hereinbefore arranged to transmit data representative of at least one operating characteristic or parameter of the device.

According to another aspect of the invention there is provided a communications method comprising controlling the operation of an optical light source to cause high frequency flickering thereof at a frequency invisible to the human eye to transmit data.

The invention will further be described, by way of example, with reference to the accompanying drawings, in which:
Figure 1 is a diagrammatic view of a device incorporating a communications system in accordance with an embodiment of the invention;
Figure 2 is a diagrammatic circuit diagram illustrating part of the device of Figure 1; and
Figure 3 is a diagrammatic circuit diagram for part of a receiver unit.

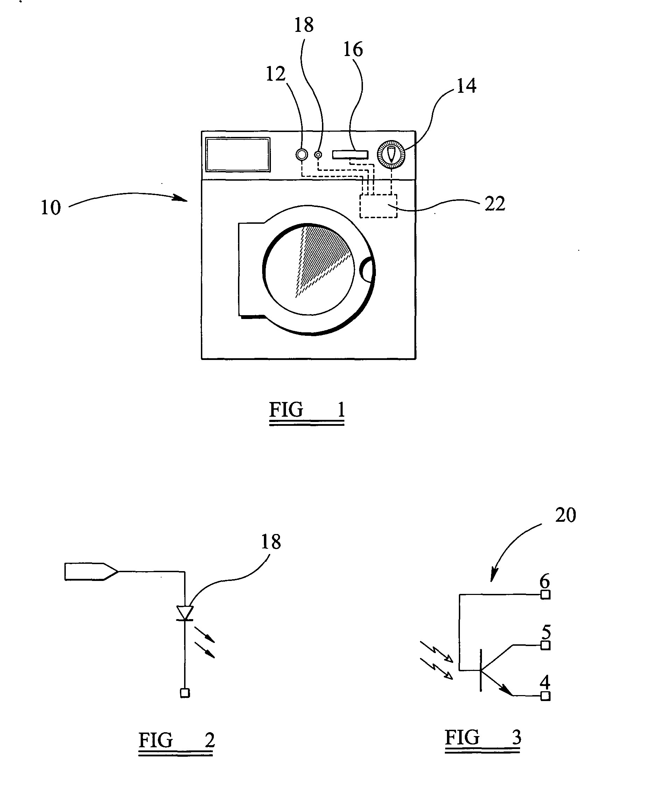

Figure 1 illustrates a device 10 incorporating a communications system in accordance with an embodiment of the invention. The device 10 illustrated in Figure 1 is a domestic washing machine including an on/off switch 12 and a rotatable dial 14 for use in controlling the operation of the device 10. The device 10 includes a liquid crystal display panel 16 for displaying information relating to the selected program or function to be performed by the device 10. The device 10 further includes a light emitting diode 18 which is controlled such as to be illuminated at all times when the device 10 is switched on. Although the device 10 in the illustrated example takes the form of a washing machine, it will be appreciated that the communication system of the invention may be applied to a wide range of devices and appliances, and the invention should not be taken to be restricted to the specific application described.

Within the device 10 are a number of components used in the normal operation of the device 10. For example, in the case of a washing machine, a heating element may be provided to heat the water used in the operation of the device. Further, a temperature sensor may be provided to allow monitoring of the temperature of the water. Other sensors may be provided, for example to ensure that the door is properly closed and locked, to sense the liquid level within the drum of the washing machine, etc. Output signals from the various sensors are supplied to a control unit 22 of the washing machine and are used in controlling the operation of the washing machine. For example, the output of a temperature sensor may be used to determine when a desired water temperature has been achieved. Once the output of the temperature sensor indicates that the desired temperature has been achieved, the control unit switches off the heating element. Another example is in filling of the washing machine with water. The control unit will arrange for the water supply to the washing machine to be switched on thereby supplying water to the drum of the washing machine. The output of the liquid level sensor is used to determine when a desired liquid level has been reached. Upon the sensor outputting a signal indicating that the desired water level has been achieved, the control unit switches off the water supply to terminate the supply of water to the drum.

Another function of the control unit is to control the operation of the LED 18 to ensure that the LED 18 is illuminated at all times when the switch 12 is in its on condition. The control of the LED 18 by the control unit is such that to the human eye the LED 18 appears to be continuously illuminated at a substantially constant light intensity. To the human eye, the LED 18 will thus not appear to flicker.

The control unit includes an encoder arranged to modulate the control signal used in controlling the operation of the LED 18, the modulation of the control signal being such as to cause the LED 18 to flicker at a high frequency, the frequency of flickering of the LED 18 being sufficiently high as to be imperceptible or invisible to the human eye. The modulation of the control signal used to control the operation of the LED 18 by the encoder is such as to encode in the control signal information relating to the output of one or more of the sensors of the device 10 such that the flickering of the LED 18, in use, transmits a signal representative of the output of one or more of the sensors.

In the event of the device 10 failing or requiring service, an engineer can use a hand set or diagnostic tool including a light sensing module 20, for example as illustrated in Figure 3 to sense the output of the LED 18, decode the transmitted signal and thereby obtain data relating to the output of the one or more sensors. It will therefore be appreciated that a maintenance or service engineer can obtain data representative of the operation of the device 10 without requiring the casing of the device 10 to be removed to gain access to the control unit thereof and without having to make a physical electrical connection to the device 10. As a result, data can be obtained in a safe, quick and convenient manner, the safety being achieved by using the optical transmission of data rather than having to make an electrical connection, and without having to remove the casing or part thereof from the device.

A range of different modulation and encoding techniques may be used in the encoding of the signal used to control the operation of the LED 18. By way of example, suitable encoding techniques include MFM, F/2F and Manchester encoding techniques. However, the invention is not restricted to any specific encoding technique and suitable encoding techniques will not be described herein in further detail. In order to be invisible to the human eye, the encoding technique should preferably be such that no direct current content is present in the control signal used to control the operation of the LED 18. Further, the modulation frequency of the signal should preferably be in excess of a lower limit of approximately 100Hz as below this limit the flickering of the LED 18 may be perceivable by the human eye.

The use of the on-off indicator light in the transmission of data is convenient as, in normal use, this light source is always illuminated. However, light sources intended for other purposes could be used. It will be appreciated that where a light source that is not always illuminated, in normal use, is used data will only be transmitted at certain times or in certain modes of operation when the light source is illuminated.

Although the description hereinbefore is of the use of the invention in controlling the operation of an LED 18 to transmit data, it will be appreciated that other light sources may be used. For example, the light source may comprise an optical lamp, a VFD or a LCD. Further, data may be transmitted by two or more such components, if desired, the data being transmitted by the components either simultaneously or in turn, and the same or different data being transmitted by the components.

As, in use, the flickering of the light source is not perceivable to the human eye, there is no requirement to be able to switch on and off the communication system, and the communication system can therefore be operative at all times during normal use of the device 10.

It will be appreciated that the communication system described hereinbefore is a one-way communication system, data being transmitted by the device 10 to a suitable hand set, but no data being transmitted in the reverse direction. Although the transmission of data to the device 10 is not possible in the arrangement described, it could be achieved by the incorporation of additional components into the device 10, if desired.

As briefly mentioned hereinbefore, the invention is not restricted to use with washing machines, but may be used in a wide range of other applications, for example showers, tumble dryers, dish washers, other so-called white goods, and televisions, videos, hi-fi systems and the like. Further a range of other modifications and alterations to the described arrangement may be made without departing from the scope of the invention.

## Claims

1. A communications system comprising an optical light source (18) and a controller (23) arranged to control the operation of the light (18) source in such a manner as to cause the light source (18) to flicker at a high frequency, in use, to thereby transmit data, the frequency of the flicker being sufficiently high that the flickering is not apparent to the human eye.

2. A system according to Claim 1, wherein the light source (18) is arranged to appear to be constantly illuminated during normal operation of a device (10) of which the light source (18) forms part.

3. A system according to Claim 1 or Claim 2, wherein the controller (22) includes an encoder arranged to modulate a control signal used to control the light source (18) to cause the high frequency flicker and transmission of data.

4. A system according to any one of the preceding claims, wherein the light source (18) comprises one of a lamp, a LED, a VFD and a LCD.

5. A system according to Claim 3, wherein the modulation technique used by the encoder results in the control signal having no DC component.

6. A system according to Claim 5, wherein the modulation technique comprises one of MFM, F/2F and Manchester encoding techniques.

7. A system according to Claim 5, wherein the modulation frequency is greater than about 100Hz.

8. A system according to Claim 1, further comprising one or more additional light sources controlled so as to flicker, in use, at a frequency not apparent to the human eye to transmit data.

9. A device incorporating a communications system as claimed in Claim 1 arranged to transmit data representative of at least one operating characteristic or parameter of the device (10).

10. A communications method comprising controlling the operation of an optical light source (18) to cause high frequency flickering thereof at a frequency invisible to the human eye to transmit data.
